# EUROPÄISCHE PATENTSCHRIFT

(11) **EP 3 664 973 B1**
(45) Veröffentlichungstag und Bekanntmachung des Hinweises auf die Patenterteilung: **14.08.2024**
(21) Anmeldenummer: 18732329.0
(22) Anmeldetag: 18.06.2018
(51) Int. Cl.: B25J 9/16, B25J 19/06

(54) **HANDHABUNGSANORDNUNG MIT EINER HANDHABUNGSEINRICHTUNG ZUR DURCHFÜHRUNG MINDESTENS EINES ARBEITSSCHRITTS SOWIE VERFAHREN UND COMPUTERPROGRAMM**
HANDLING ASSEMBLY COMPRISING A HANDLING DEVICE FOR CARRYING OUT AT LEAST ONE WORK STEP, METHOD, AND COMPUTER PROGRAM
SYSTÈME DE MANIPULATION AYANT UN DISPOSITIF DE MANIPULATION POUR EFFECTUER AU MOINS UNE ÉTAPE DE TRAVAIL, PROCÉDÉ ET PROGRAMME INFORMATIQUE

(30) Priorität: 07.08.2017 DE 102017213658
(43) Veröffentlichungstag der Anmeldung: 17.06.2020
(73) Patentinhaber: Robert Bosch GmbH, 70442 Stuttgart (DE)
(72) Erfinder: SCHLAICH, Peter, 71229 Leonberg (DE); KUNZ, Dieter, 71254 Ditzingen (DE); HOFELE, Jens, 73252 Lenningen (DE); PFEIFFER-SCHEER, Corinna, 71706 Markgroeningen (DE); KNOLL, Christian, 70376 Stuttgart (DE)
(86) Internationale Anmeldenummer: PCT/EP2018/066083
(87) Internationale Veröffentlichungsnummer: WO 2019/029878

(56) Entgegenhaltungen:
- WO-A1-2006/043873
- WO-A1-2017/098713
- DE-A1- 102004 032 996
- US-A1- 2004 260 563
- US-A1- 2008 091 301
- US-A1- 2012 290 130
- US-A1- 2014 277 737
- US-A1- 2014 288 711
- US-A1- 2018 354 140
- VAN DELDEN S. ET AL: "Towards Voice-Guided Robotic Manipulator Jogging", PROCEEDINGS OF THE 12TH WORLD MULTICONFERENCE ON SYSTEMICS, CYBERNETICS AND INFORMATICS, vol. 3, 29 June 2008 (2008-06-29), pages 138 - 144, XP055868043, Retrieved from the Internet <URL:https://www.iiis.org/CDs2008/CD2008SCI/SCI2008/PapersPdf/S259KD.pdf> [retrieved on 20211201]
- ADAM ROGOWSKI: "Robotized cell remote control using voice commands in natural language", METHODS AND MODELS IN AUTOMATION AND ROBOTICS (MMAR), 2010 15TH INTERNATIONAL CONFERENCE ON, IEEE, PISCATAWAY, NJ, USA, 23 August 2010 (2010-08-23), pages 383 - 386, XP031764453, ISBN: 978-1-4244-7828-6

## Beschreibung

### Stand der Technik

Es wird eine Handhabungsanordnung mit einer Handhabungseinrichtung zur Durchführung mindestens eines Arbeitsschritts mit und/oder an einem Werkstück in einem Arbeitsbereich der Handhabungseinrichtung vorgeschlagen, wobei im Arbeitsbereich Stationen angeordnet sind, mit mindestens einem Überwachungssensor zur optischen Überwachung des Arbeitsbereichs und zur Bereitstellung als Überwachungsdaten. Es wird ferner ein Verfahren sowie ein entsprechendes Computerprogramm vorgeschlagen.

Handhabungseinrichtungen wie beispielsweise Industrieroboter werden häufig in der industriellen Fertigung eingesetzt. Ein Programm eines Industrieroboters legt die räumliche Lage und Orientierung von Raumpunkten fest, welche der Roboter in einer zeitlichen und/oder logischen Abfolge abfährt. Durch eine positionsabhängige Verkettung von Schaltsignalen werden Werkzeuge, beispielsweise Greifer, Schweißbrenner oder Dispenser angesteuert, wobei so verschiedene Applikationen mit eines Roboter darstellbar sind.

Die heute bekannten Einlernverfahren für Handhabungseinrichtungen lassen sich insbesondere grob klassifizieren in Onlineprogrammierungen und Offlineprogrammierungen:
- Onlineprogrammierungen zeichnen sich dadurch aus, dass die Handhabungseinrichtung über ein Handbediengerät manuell an Zielpositionen bewegt wird und diese nach Erreichen in der Steuerung abgespeichert werden. Alternativ bieten einige Roboterkinematiken die Möglichkeit, den Arm kraftfrei zu schalten und die Raumpunkte durch direkte Führung des Arms einzulernen. Die Festlegung der Ablaufsequenzen erfolgt insbesondere durch Quellcodeprogrammierung.
- Offlineprogrammierungen zeichnen sich dadurch aus, dass Konstruktionsmodelle, beispielsweise CAD-Modelle, der Handhabungseinrichtung und der kompletten Fertigungsumgebung hinterlegt sind. In einer Simulationsumgebung werden analog zur Onlineprogrammierung die Mechanismen der Onlineprogrammierung virtuell durchgeführt oder Bewegungspunkte direkt aus dem CAD-Modell abgeleitet.

Die Druckschrift DE 10 2016 002 781 A1 betrifft eine Arbeitsstation zum Durchführen wenigstens eines Arbeitsvorgangs mit wenigstens einem Roboter, welcher eine Mehrzahl von gelenkig miteinander verbundenen und relativ zueinander bewegbaren Roboterachsen aufweist, wobei ein Wagen mit Bodenkontaktelementen, über welche der Wagen entlang eines Bodens bewegbar ist, und wenigstens eine Arbeitsplatte aufweist, welche eine Mehrzahl von Befestigungselementen aufweist, mittels welchem der Roboter in unterschiedlichen Positionen an der Arbeitsplatte befestigbar ist.

Die Druckschrift US 2008/091301 A1 beschreibt ein System zur Steuerung der Bewegung eines Roboters, wobei der Roboter an einer Mehrzahl an Stationen tätig sein kann und/oder betrieben wird.

In der Druckschrift WO 2006/043873 A1 ist eine Methode und ein System zur Programmierung eines Industrieroboters beschreiben. Der Industrieroboter führt Arbeitsschritte an unterschiedlichen Stationen aus. Die Programmierung erfolgt mittels eines graphischen User-interfaces.

Die Druckschrift US 2014/288711 A1 offenbart ein Robotersystem, welches einen Roboter und eine Kameraeinheit aufweist. Die Kameraeinheit nimmt Bilder vom Arbeitsbereich des Roboters auf. Eine Steuereinheit bestimmt basierend auf den Bildern Umgebungsinformationen zum Betreiben des Roboters.

In der Druckschrift US 2014/277737 A1 ist ein System zur Bewegungssteuerung eines Roboters beschrieben. Die Steuerung basiert auf der Aufnahme von Bildern des Roboters und dessen Umgebung. Insbesondere werden die Bilder zur Generierung einer Augmented Reality genutzt.

Die Druckschrift US 2012/290130 A1 betrifft eine Methode zur Bestimmung eines 3D-Modells einer Roboterzelle. Die Methode sieht ein vordefiniertes erstes Modell vor, welches mittels Bildaufnahmen der Roboterzelle zu dem 3D-Modell angepasst wird.

Die Druckschrift DE 10 2004 032996 A1, offenbart ein Verfahren zur Erstellung eines Roboterbewegungsablauf von einem Startpunkt zu einem Endpunkt. Mittels Kameraaufnahmen wird der reale Arbeitsbereich in einen virtuellen Arbeitsbereich gewandelt und dargestellt. Der Startpunkt und der Endpunkt werden von Benutzer in einem virtuellen Arbeitsbereich ausgewählt.

Die Druckschrift S. van Delden und B. Overcash "Towards voice-guided robotic manipulator jogging" Proceedings of the 12th world Multiconference on Systemics, Cybernetics and Informatics, Bd. 3, 29 Juni 2008 Seiten 138 bis 144 offenbart eine Sprachsteuerung für Roboter.

Die Druckschrift S. Rogowski "Robotized cell remote control using voice commands in natural language" 2010 15th International Conferene on Methods and Models in Automation and Robotics 2010 , pp. 383-386 offenbart eine Sprachsteuerung für Roboter.

Die Druckschrift US 2004/0260563 A1 offenbart eine Sprachsteuerung für Roboter.

Die Druckschrift WO2017 098713 A1 offenbart eine Sprachsteuerung für Roboter.

### Offenbarung der Erfindung

Im Rahmen der Erfindung wird eine Handhabungsanordnung mit einer Handhabungseinrichtung zur Durchführung mindestens eines Arbeitsschritts mit den Merkmalen des Anspruchs 1 vorgeschlagen. Ferner wird ein Verfahren zur Durchführung eines Arbeitsschrittes mit den Merkmalen des Anspruchs 9 und ein Computerprogramm zur Durchführung des Verfahrens mit den Merkmalen des Anspruchs 10 vorgeschlagen. Bevorzugte und/oder vorteilhafte Ausführungsformen der Erfindung ergeben sich aus den Unteransprüchen, der nachfolgenden Beschreibung sowie den beigefügten Figuren.

### (Fortsetzung ursprüngliche Beschreibung Seite 3)

Erfindungsgemäß wird eine Handhabungsanordnung mit einer Handhabungseinrichtung zur Durchführung mindestens eines Arbeitsschrittes mit einem Werkstück und/oder an einem Werkstück in einem Arbeitsbereich der Handhabungseinrichtung vorgeschlagen. Die Handhabungsanordnung umfasst dabei mindestens einen, alternativ eine Mehrzahl an Handhabungseinrichtungen. Insbesondere ist es vorgesehen, dass die Handhabungseinrichtung stationär im Arbeitsbereich angeordnet ist, alternativ ist die Handhabungseinrichtung mobil im Arbeitsbereich bewegbar. Die Handhabungseinrichtung ist insbesondere ein Roboter. Die Handhabungseinrichtung ist im Speziellen ein Mehrarmroboter, beispielsweise ein Zweiarmroboter oder ein Dreiarmroboter. Besonders bevorzugt ist es, dass die Handhabungseinrichtung ein Mehrachsroboter ist, wobei der Mehrachsroboter vorzugsweise mindestens drei Achsen aufweist und/oder um diese dreh- und/oder bewegbar ist. Optional ist die Handhabungseinrichtung beispielsweise ein kollaborierender und/oder ein kooperierender Roboter. Die Handhabungseinrichtung ist zum Beispiel ausgebildet, mit einer weiteren, insbesondere dergleichen, Handhabungseinrichtung zur Durchführung des Arbeitsschrittes zusammenzuarbeiten und/oder mit einem Menschen zur Durchführung des Arbeitsschrittes zusammenzuarbeiten.

Die Handhabungseinrichtung ist ausgebildet, den Arbeitsschritt in dem Arbeitsbereich durchzuführen. Der Arbeitsbereich ist beispielsweise ein Fertigungsfeld oder ein Produktionsabschnitt. Der Arbeitsbereich ist vorzugsweise ein dreidimensionaler Raumbereich. Besonders bevorzugt ist es, dass die Handhabungseinrichtung in dem Arbeitsbereich angeordnet ist.

Das Werkstück ist beispielsweise ein Bauteil und/oder ein zu bearbeitendes Teil. Die Handhabungseinrichtung ist beispielsweise ausgebildet, das Werkstück zu greifen und/oder zu bearbeiten, insbesondere mit Bearbeitungselementen der Handhabungseinrichtung und/oder einer Station. Zum Beispiel ist die Handhabungseinrichtung ausgebildet, das Werkstück zu greifen, zu bearbeiten, beispielsweise zu bohren, zu schleifen, zu schweißen und/oder das Werkstück abzulegen. Alternativ und/oder ergänzend ist die Handhabungseinrichtung ausgebildet, eine Mehrzahl an Werkstücken zu bearbeiten, zusammenzufügen und/oder zu transportieren.

Im Arbeitsbereich der Handhabungseinrichtung ist mindestens eine Station angeordnet. Die Station ist stationär im Arbeitsbereich angeordnet, alternativ ist die Station mobil im Arbeitsbereich angeordnet. Stationen sind insbesondere flächige und/oder räumliche Abschnitte des Arbeitsbereichs der Handhabungseinrichtung. Die Station ist insbesondere eine Prozessstation, beispielsweise eine Station, an der das Werkstück bearbeitet werden kann. Alternativ und/oder ergänzend ist die Station ein Ort, an dem das Werkstück zur Verfügung gestellt wird, beispielsweise eine Palette mit Rohteilen, und/oder die Station ist eine Station, an der ein fertig bearbeitetes Werkstück abgelegt werden kann, beispielsweise eine Palette. Beispielsweise werden Stationen in Werkstückquellen und Werkstücksenken unterschieden.

Die Handhabungsanordnung umfasst mindestens einen Überwachungssensor. Der Überwachungssensor ist vorzugsweise stationär angeordnet, alternativ ist der Überwachungssensor handgeführt, robotergeführt oder anderweitig beweglich im Arbeitsbereich angeordnet. Der Überwachungssensor ist zur optischen Überwachung des Arbeitsbereiches ausgebildet, wobei die optische Überwachung als Überwachungsdaten bereitgestellt wird. Der Überwachungssensor ist vorzugsweise ein 3D-Sensor, beispielsweise eine Stereokamera. Vorzugsweise ist der Überwachungssensor eine Überwachungskamera, beispielsweise eine Videokamera oder eine Einzelbildkamera. Die Überwachungskamera ist beispielsweise eine Schwarz-Weiß-Kamera oder eine Farbkamera, wobei diese insbesondere eine CCD- oder CMOS-Kamera ist. Die Überwachungsdaten umfassen insbesondere Bilder der optischen Überwachung des Arbeitsbereiches. Insbesondere werden die Bilder auch Überwachungsbilder genannt. Ferner ist es möglich, dass die Handhabungsanordnung eine Mehrzahl an Überwachungssensoren aufweisen, wobei die Überwachungssensoren so angeordnet und/oder ausgebildet sind, dass diese gleiche Abschnitte, mit teilweiser Überlappung, abbilden, dass so die optische Überwachung der unterschiedlichen Überwachungssensoren zu einer globalen Überwachung des Arbeitsbereiches zusammengesetzt werden kann.

Die Handhabungsanordnung umfasst ein Lokalisierungsmodul. Das Lokalisierungsmodul ist beispielsweise ein Prozessormodul, ein Mikrocontroller oder eine Rechnereinheit. Insbesondere ist das Lokalisierungsmodul datentechnisch mit dem Überwachungssensor verbunden, wobei dem Lokalisierungsmodul die Überwachungsdaten bereitgestellt sind. Das Lokalisierungsmodul ist zu einer datentechnischen Auswertung und/oder Bewertung der Überwachungsdaten ausgebildet.

Das Lokalisierungsmodul ist ausgebildet die Stationen zu erkennen, insbesondere die Stationen basierend auf und/oder in den Überwachungsdaten zu erkennen. Insbesondere erkennt das Lokalisierungsmodul die Stationen in den Überwachungsdaten, beispielsweise in den Überwachungsbildern des Überwachungsbereichs und/oder kann zuordnen, wo im Arbeitsbereich sich die Stationen befinden. Das Lokalisierungsmodul ist ferner ausgebildet, basierend auf den Überwachungsdaten für eine erkannte Station eine Position der Station als Stationsposition zu bestimmen. Ferner kann es vorgehsehen sein, dass das Lokalisierungsmodul ausgebildet ist, auch Anwesenheit und/oder eine Position der Werkstücke in der Station zu bestimmen. Beispielsweise wird durch das Lokalisierungsmodul eine Anwesenheit von Werkstücken in den Stationen, im Speziellen in einer Palette oder in einem Nestes, geprüft, wobei das die Handhabungseinrichtung vorzugsweise dann nur vollständig befüllte Werkstücke handhabt. Alternativ und/oder ergänzend kann das Lokalisierungsmodul ausgebildet sein, die absolute Position und/oder absolute Lage des Werkstücks in der Station zu bestimmen. Insbesondere ist die Bestimmung der Stationsposition eine Bestimmung mit einer Genauigkeit besser als ein Millimeter. Das Lokalisierungsmodul ist insbesondere ausgebildet, permanent und/oder zyklisch die Stationen zu erkennen und/oder permanent und/oder zyklisch die Stationspositionen zu bestimmen. Beispielsweise ist das Lokalisierungsmodul ausgebildet, während des Arbeitsschrittes mindestens fünf Mal die Stationsposition zu bestimmen.

Es ist eine Überlegung der Erfindung, eine Handhabungsanordnung mit einer Handhabungseinrichtung bereitzustellen, welche zeiteinsparend eine Handhabungseinrichtung, insbesondere einen Mehrarmroboter, einlernt und/oder initialisiert, wobei insbesondere auf einen Experten verzichtet werden kann. Insbesondere ist es eine Überlegung der Erfindung, eine Handhabungsanordnung bereitzustellen, welche eine schnelle Initialisierung eines Mehrachsroboters mit mehr als drei Achsen ermöglicht. Insbesondere wird dies dadurch ermöglicht, dass mittels eines 3D-Sensors weitgehend automatisch die Stationen im Arbeitsbereich erkannt werden können und die Handhabungseinrichtung diese ausführen kann. In einer möglichen Ausgestaltung der Erfindung umfasst das Lokalisierungsmodul ein Einlernmodul mit Trainingsdaten. Insbesondere sind die Trainingsdaten dem Einlernmodul bereitstellbar und/oder in diesem hinterlegbar. Die Trainingsdaten sind vorzugsweise Bilddaten. Beispielsweise sind die Trainingsdaten Bilder, auf welchen Stationen mit üblichen Geometrien, Formen und/oder Abmessungen zu sehen sind. Das Einlernmodul ist ausgebildet, basierend auf den Trainingsdaten Erkennungsmerkmale zur Detektion der Stationen zu bestimmen. Beispielsweise sind die Erkennungsmerkmale die Geometrie, die Abmessung, die Form, die Struktur, der Kontrast und/oder weitere Eigenschaften der Stationen. Die Stationserkennungsdaten umfassen die Erkennungsmerkmale. Die Stationserkennungsdaten umfassen insbesondere Informationen, wie in den Überwachungsdaten und/oder der optischen Überwachung des Arbeitsbereiches Stationen aufgefunden und/oder detektiert werden können. Das Lokalisierungsmodul ist ausgebildet, basierend auf den Stationserkennungsdaten die Stationen zu erkennen. Die Erkennungsmerkmale sind insbesondere nutzbar, Elemente in den Überwachungsdaten, in den Bildern des Arbeitsbereiches und/oder einem Modell des Arbeitsbereiches zu klassifizieren.

Das Einlernmodul ist vorzugsweise ausgebildet, die Erkennungsmerkmale basierend auf einem maschinellen Lernen zu bestimmen. Beispielsweise ist das Einlernmodul als ein neuronales Netzwerk ausgebildet. Alternativ und/oder ergänzend ist das Einlernmodul ausgebildet, mittels eines überwachten Lernens, mittels eines teilüberwachten Lernens, mittels eines unüberwachten Lernens und/oder mittels eines bestärkenden Lernens aus den Trainingsdaten die Erkennungsmerkmale zu extrahieren. Dieser Ausgestaltung liegt die Überlegung zugrunde, eine universell einsetzbare Handhabungsanordnung bereitzustellen, welche die Stationen in unterschiedlichen Arbeitsbereichen erkennt.

Es ist vorgesehen, dass die Handhabungsanordnung ein Modellerzeugungsmodul umfasst. Das Modellerzeugungsmodul ist ausgebildet, ein Modell des Arbeitsbereichs zu generieren. Das Modell des Arbeitsbereiches ist insbesondere ein 3D-Modell. Vorzugsweise ist das Modell des Arbeitsbereiches ein CAD-Modell. Im Speziellen ist das Modell ein durch den Sensor erzeugtes Modell und/oder ein auf den Überwachungsdaten basierendes Modell. Das Modell des Arbeitsbereiches umfasst insbesondere die Position der Stationen und/oder die Position der Handhabungseinrichtung im Arbeitsbereich.

Die Handhabungsanordnung umfasst eine Anzeigeeinheit zur Anzeige des Modells. Die Anzeigeeinheit ist beispielsweise ein Monitor und im Speziellen ein Touchscreen-Monitor, mittels welchem ein Benutzer Daten eingeben kann und/oder Dinge auswählen kann. Die Anzeigeeinheit ist zur grafischen und/oder bildhaften, zweidimensionalen oder dreidimensionalen Anzeige des Modells ausgebildet.

Es ist vorgesehen, dass durch einen Benutzer im angezeigten Modell Abschnitte als Zusatzerkennungsmerkmale auswählbar sind. Dabei kann der Benutzer beispielsweise Bereiche und/oder Abschnitte im Modell auswählen, welche der Benutzer als Stationen erkennt und/oder identifiziert. Die ausgewählten Zusatzmerkmale sind von den Prozesserkennungsdaten umfasst. Insbesondere kann der Benutzer auch erkannte Stationen erweitern, wenn beispielsweise diese nicht vollständig erfasst und/oder erkannt sind. Dieser Ausgestaltung liegt die Überlegung zugrunde, mittels eines Benutzers Zusatzinformationen und/oder nicht erkannte Stationen der Handhabungsanordnung mitzuteilen und/oder einzulernen. Eine Ausgestaltung der Erfindung sieht vor, dass die Handhabungsanordnung ein Steuermodul umfasst. Das Steuermodul ist insbesondere eine Rechnereinheit, ein Prozessor oder ein Mikrocontroller. Das Steuermodul ist ausgebildet, die Handhabungseinrichtung zur Durchführung eines Arbeitsschrittes basierend auf der und/oder den Stationspositionen anzusteuern. Insbesondere ist das Steuermodul ausgebildet, die Handhabungseinrichtung zur Durchführung genau eines Arbeitsschrittes und/oder einer Vielzahl von Arbeitsschritten basierend auf den Stationspositionen anzusteuern. Beispielsweise ist das Steuermodul ausgebildet, die Handhabungseinrichtung anzusteuern, das Werkstück von einer ersten Stationsposition zu einer zweiten Stationsposition zu bewegen und/oder zu transportieren. Insbesondere sind Arbeitsschritte Prozesse, welche bei einer ersten Station mit einer ersten Stationsposition beginnen und bei einer zweiten Station mit einer zweiten Stationsposition enden. Ferner kann es möglich sein, dass zwischen der ersten Station und der zweiten Station weitere Stationen mit weiteren Stationspositionen angefahren und/oder integriert sind. Dieser Ausgestaltung liegt die Überlegung zugrunde, eine Handhabungsanordnung bereitzustellen, welche die Prozesse selbstständig planen kann, wobei diese Planung auf den Stationspositionen basiert, welche durch das Lokalisierungsmodul bestimmt wurden.

Die Handhabungsanordnung umfasst ein Aufgabendefinitionsmodul. Das Aufgabendefinitionsmodul ist eine Rechnereinheit, ein Prozessor oder ein Mikrocontroller. Insbesondere kann das Aufgabendefinitionsmodul Teil des Steuermoduls sein. Das Aufgabendefinitionsmodul ist ausgebildet, dass durch den Benutzer der Arbeitsschritt ausgewählt und/oder definiert werden kann. Der Arbeitsschritt wird semantisch definiert und/oder ausgewählt. Alternativ und/oder ergänzend ist die Auswahl und/oder die Definition des Arbeitsschrittes mittels der optischen Darstellung auf einer und/oder auf der Anzeigeeinheit möglich. Insbesondere erfolgt die Definition und/oder die Auswahl des Arbeitsschrittes durch eine Beschreibung und/oder Festlegung des Anfangszustandes und des Zielzustandes, wie beispielsweise der Definition der ersten Station und der Definition und/oder Festlegung der zweiten Station. Beispielsweise wird diese Definition des Arbeitsschrittes durch eine Auswahl einer Werkstückquelle und einer Werkstücksenke erreicht, wobei den Werkstückquellen eine Station zugeordnet wird und der Werkstücksenke eine weitere Station zugeordnet wird. Die Auswahl und/oder Definition durch den Benutzer kann im Speziellen rein textuell erfolgen, beispielsweise "Setze alle Werkstücke von Palette A nach Palette B". Vorzugsweise kann die erste Station optisch auf der Anzeigeeinheit ausgewählt werden, wobei insbesondere auch die zweite Station auf der Anzeigeeinheit auswählbar ist. Dieser Ausgestaltung liegt die Überlegung zugrunde, eine Handhabungsanordnung bereitzustellen, bei der zur Festlegung eines Prozesses und/oder eines Arbeitsschrittes kein Softwareexperte nötig ist. Besonders bevorzugt ist es, dass der Arbeitsschritt mindestens zwei zu definierende Parameter aufweist. Insbesondere weist der Arbeitsschritt genau zwei zu definierende Parameter auf, alternativ weist der Arbeitsschritt eine Mehrzahl an zu definierenden Parametern auf. Die zwei zu definierenden Parameter umfassen eine Startposition und eine Endposition. Insbesondere ist durch den Benutzer im angezeigten Modell eine der Stationen als Startposition auswählbar, wobei im angezeigten Modell eine weitere Station und/oder die gleiche Station als Endposition auswählbar ist. Dabei ist es insbesondere vorgesehen, dass der Arbeitsschritt mit den zwei zu definierenden Parametern an der Startposition beginnt und an der Endposition endet.

Optional ist es vorgesehen, dass nach Beendigung des Arbeitsschrittes das Werkstück in einer Endlage ist. Insbesondere ist die Endlage definiert als ein Punkt im dreidimensionalen Raum, wobei dem Werkstück in diesem Punkt insbesondere eine Winkellage, beispielsweise mittels Eulerwinkel, zuordenbar ist. Insbesondere ist die Endlage durch den Benutzer mittels des Aufgabenplanungsmoduls auswählbar. Beispielsweise kann der Benutzer im Aufgabendefinitionsmodul die Lage, in Form von Koordinaten und Winkellage, einstellen und/oder auswählen, insbesondere optisch auswählen. Vorzugsweise ist das Aufgabenplanungsmodul ausgebildet, die Ablage des Werkstücks basierend auf den Überwachungsdaten zu bestimmen, beispielsweise basierend auf einem Einpass-Algorithmus. Insbesondere ist es vorgesehen, dass für den Fall dass der Einpass-Algorithmus mehrere Ablagemöglichkeiten ermittelt, der Benutzer die Vorzugslage auswählen kann.

Die Handhabungsanordnung umfasst ein Sicherungsmodul. Das Sicherungsmodul ist vorzugsweise eine Rechnereinheit, ein Prozessor oder ein Mikrochip. Das Sicherungsmodul ist zur Übernahme der Überwachungsdaten während des Arbeitsschrittes datentechnisch mit dem Überwachungssensor verbunden. Insbesondere bekommt das Sicherungsmodul zyklisch, beispielsweise alle Sekunde oder alle zehn Sekunden, die Überwachungsdaten des Überwachungssensors bereitgestellt. Das Sicherungsmodul ist ausgebildet, basierend auf Veränderungen im Überwachungsbereich die Handhabungseinrichtung anzusteuern. Beispielsweise ist das Sicherungsmodul ausgebildet, darauf zu reagieren, wenn sich die Anordnung der Stationen im Arbeitsbereich der Handhabungseinrichtung ändern, wobei das Sicherungsmodul dazu beispielsweise das Lokalisierungsmodul zur neuen Bestimmung der Stationspositionen ansteuert.

Alternativ und/oder ergänzend ist das Sicherungsmodul ausgebildet, zu erkennen, wenn sich im Arbeitsbereich der Handhabungseinrichtung ein Mensch befindet, wobei insbesondere das Sicherungsmodul erkennt, ob für den Menschen Verletzungsgefahr besteht, und bei Detektion des Menschen und/oder bei Verletzungsgefahr des Menschen ausgebildet ist, die Handhabungseinrichtung anzuhalten. Ferner kann das Sicherungsmodul ausgebildet sein, beim Verlassen des Menschen aus dem Arbeitsbereich der Handhabungseinrichtung, die Handhabungseinrichtung zur Wiederaufnahme und/oder Fortsetzung des Arbeitsschrittes anzusteuern. Dieser Ausgestaltung liegt die Überlegung zugrunde, eine besonders sichere Handhabungsanordnung bereitzustellen.

In einer Ausgestaltung der Erfindung ist es vorgesehen, dass die Handhabungsanordnung ein Bahnplanungsmodul umfasst. Das Bahnplanungsmodul ist eine Rechnereinheit, ein Prozessor oder ein Mikrochip. Das Bahnplanungsmodul ist ausgebildet, eine Trajektorie der Handhabungseinrichtung und/oder des Werkstückes zu bestimmen, wobei die Trajektorie der räumlich-zeitliche Weg des Werkstückes bei der Durchführung des Arbeitsschrittes ist. Insbesondere ist das Bahnplanungsmodul ausgebildet, die Trajektorie der Handhabungseinrichtung und/oder des Werkstücks kollisionsfrei zu bestimmen, wobei kollisionsfrei sich insbesondere auf die Vermeidung einer Kollision des Werkstückes mit der Handhabungseinrichtung und/oder mit Gegenständen in dem Arbeitsbereich der Handhabungseinrichtung bezieht. Alternativ und/oder ergänzend wird durch das Bahnplanungsmodul ausgebildet, eine Kollision zwischen einem ersten Arm und einem zweiten Arm der Handhabungseinrichtung auszuschließen. Insbesondere erfolgt die Bestimmung der Trajektorie der Handhabungseinrichtung durch das Bahnplanungsmodul basierend auf den Stationspositionen und/oder den Überwachungsdaten des Überwachungssensors.

Besonders bevorzugt ist es, dass die Handhabungsanordnung ein Prüfmodul umfasst. Das Prüfmodul umfasst insbesondere Regeln. Die Regeln sind insbesondere durch einen Benutzer festlegbar und/oder in dem Prüfmodul hinterlegbar. Die Regeln umfassen beispielsweise Eigenschaften des Werkstückes und/oder der Stationen. Beispielsweise kann eine Regel lauten: "kippe das Werkstück nicht in diese oder jene Position". Weitere Beispiele für Regeln sind beispielsweise: "setze das Werkstück nicht ab, wenn es nicht horizontal liegt" oder "bearbeite das Werkstück erst dann, wenn der Deckel des Werkstücks abgenommen ist". Das Prüfmodul ist ausgebildet, die Handhabungseinrichtung zur Durchführung und/oder zum Abbruch des Arbeitsschrittes basierend auf der Erfüllung der Regeln anzusteuern. Beispielsweise ist das Prüfmodul ausgebildet, den Arbeitsschritt und/oder die Handhabungseinrichtung anzuhalten, wenn eine Regel nicht erfüllt ist.

Eine besonders bevorzugte Ausgestaltung der Erfindung sieht vor, dass die Handhabungsanordnung einen Zusatzsensor zur Feinauflösung eines Abschnittes des Arbeitsbereiches und/oder des gesamten Arbeitsbereiches umfasst. Der Zusatzsensor ist beispielsweise ein Taster, eine Kamera oder ein Laserscanner. Der Zusatzsensor kann räumlich fest im Arbeitsbereich angeordnet sein, alternativ ist der Zusatzsensor ein mit der Handhabungseinrichtung mitgeführter Zusatzsensor. Insbesondere ist der Zusatzsensor zur Bereitstellung von Feinauflösungsdaten ausgebildet, wobei die Feinauflösungsdaten die Feinauflösung des Abschnittes durch den Zusatzsensor umfassen. Die Handhabungsanordnung umfasst ein Feinlokalisierungsmodul zur exakteren Lagebestimmung der Station basierend auf der Stationsposition, den Feinauflösungsdaten, den Stationserkennungsdaten und/oder den Sensordaten. Beispielsweise ist der Zusatzsensor ein mit der Handhabungseinrichtung mitgeführter Zusatzsensor, wobei zur Feinauflösung der Zusatzsensor durch die Handhabungseinrichtung in den entsprechenden Bereich gefahren wird, der Zusatzsensor diesen Bereich aufnimmt und/oder vermisst, wobei durch das Feinlokalisierungsmodul dieser Bereich exakter aufgelöst wird. Dieser Ausgestaltung liegt die Überlegung zugrunde, eine datenreduzierte Möglichkeit bereitzustellen, bei einer Handhabungsanordnung Abschnitte genauer zu definieren.

Einen weiteren Gegenstand der Erfindung bildet ein Verfahren zur Durchführung mindestens eines Arbeitsschrittes mit einer Handhabungseinrichtung. Mittels eines Überwachungssensors wird ein Arbeitsbereich der Handhabungseinrichtung optisch überwacht. Der Überwachungssensor stellt die optische Überwachung als Überwachungsdaten bereit. Basierend auf den Überwachungsdaten und basierend auf hinterlegten Stationserkennungsdaten werden die Stationen im Arbeitsbereich detektiert und/oder erkannt, wobei für die erkannten Stationen eine Position als Stationsposition bestimmt wird.

Einen weiteren Gegenstand der Erfindung bildet ein Computerprogramm mit Programmcodemitteln, um alle Schritte des Verfahrens durchzuführen, wenn das Programm auf einem Computer und/oder auf der Handhabungsanordnung ausgeführt wird.

Weitere Merkmale, Vorteile und Wirkungen der Erfindung ergeben sich aus der nachfolgenden Beschreibung bevorzugter Ausführungsbeispiele der Erfindung. Dabei zeigen:
Figur 1 eine schematische Ansicht eines Ausführungsbeispiels einer Handhabungsanordnung;
Figur 2a und 2b eine schematische Ansicht auf eine Anzeigeeinheit der Handhabungsanordnung aus Figur 1;
Figur 3 ein Ablaufdiagramm für ein Ausführungsbeispiel des Verfahrens zur Durchführung eines Arbeitsschritts mit der Handhabungseinrichtung.

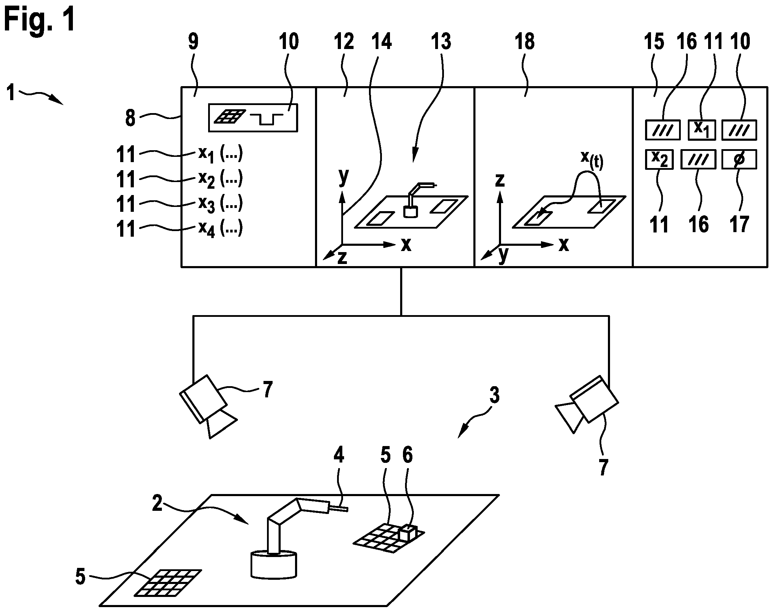

Figur 1 zeigt eine schematische Ansicht auf eine Handhabungsanordnung 1. Die Handhabungsanordnung 1 umfasst eine Handhabungseinrichtung 2. Die Handhabungseinrichtung 2 ist in einem Arbeitsbereich 3 angeordnet. Die Handhabungseinrichtung 2 ist als ein Mehrachsroboter ausgebildet und ist insbesondere um mindestens drei Achsen bewegbar und/oder schwenkbar. Die Handhabungseinrichtung 2 weist einen Greifer 4 auf. Der Greifer 4 ist mittels der Handhabungseinrichtung 2 im Arbeitsbereich 3 bewegbar. Insbesondere ist der Greifer 4 in drei Dimensionen im Arbeitsbereich 3 bewegbar. Der Arbeitsbereich 3 ist beispielsweise eine Fabrikationsanlage, ein Produktionsabschnitt und/oder ein Fabrikhallenabschnitt.

In dem Arbeitsbereich 3 sind Stationen 5 angeordnet. Die Stationen 5 sind beispielsweise Ablageplätze für ein Werkstück 6. Dabei kann beispielsweise eine Station 5 als eine Werkstückquelle aufgefasst werden, wobei eine andere Station 5 als eine Werkstücksenke aufgefasst werden kann. Beispielsweise ist eine Station 5 eine Palette, auf welcher die Werkstücke angeordnet sind und/oder anordenbar sind. Die Stationen 5 sind vorzugsweise an festen Orten im Arbeitsbereich 3 angeordnet, alternativ sind die Stationen 5 im Arbeitsbereich 3 der Handhabungseinrichtung 2 verschiebbar und/oder bewegbar.

Die Handhabungseinrichtung 2 ist zur Durchführung eines Arbeitsschrittes ausgebildet. Der Arbeitsschritt kann beispielsweise sein, "greife ein Werkstück 6 in einer ersten Station 5 mit dem Greifer 4 und transportiere das Werkstück 6 zu der anderen Station 5 und lege es dort ab". Ferner kann die Handhabungseinrichtung 2 eine Vielzahl an Arbeitsschritten ausführen, beispielsweise, greife das Werkstück 6 mit dem Greifer 4 und bearbeite das Werkstück 6, beispielsweise mit einem Bohrer.

Die Handhabungsanordnung 1 umfasst zwei Überwachungssensoren 7. Die Überwachungssensoren 7 sind als Überwachungskameras ausgebildet. Die Überwachungssensoren 7 sind zur optischen Überwachung des Arbeitsbereiches 3 ausgebildet. Dazu nehmen die Überwachungssensoren 7 den Arbeitsbereich 3 in Form von Überwachungsbildern auf. Die Überwachungssensoren 7 sind zur Bereitstellung von Überwachungsdaten ausgebildet, wobei die Überwachungsdaten insbesondere die Überwachungsbilder umfassen. Insbesondere sind die Überwachungssensoren 7 so angeordnet, dass die Überwachungsbilder einen Überlappbereich aufweisen, wobei der Überlappbereich einen gemeinsamen Bereich des Arbeitsbereiches 3 zeigen. Besonders bevorzugt ist es, dass die Überwachungssensoren 7 Stereokameras sind, wobei diese Stereokameras ein dreidimensionales Abbild des Arbeitsbereiches 3 erstellen. Die Überwachungsdaten sind einer zentralen Auswerteeinheit 8 bereitgestellt.

Die zentrale Auswerteeinheit 8 ist beispielsweise als eine Rechnereinheit ausgebildet. Dabei kann es vorgesehen sein, dass die zentrale Auswerteeinheit 8 dezentral zum Beispiel in einem Serverraum angeordnet ist, alternativ ist die Auswerteeinheit 8 eine zentrale Auswerteeinheit 8, die beispielsweise in die Handhabungseinrichtung 2 integriert.

Die zentrale Auswerteeinheit 8 umfasst ein Lokalisierungsmodul 9. Dem Lokalisierungsmodul 9 sind die Überwachungsdaten bereitgestellt. Das Lokalisierungsmodul 9 umfasst Stationserkennungsdaten 10. Die Stationserkennungsdaten 10 umfassen insbesondere Informationen und/oder Merkmale, die auf eine Station in den Überwachungsdaten und/oder in den Überwachungsbildern schließen lassen. Beispielsweise weisen die Stationserkennungsdaten 10 Informationen über die Geometrie, über die Konturen, über den Kontrast und/oder über die Struktur von Stationen 5 in den Überwachungsdaten und/oder Überwachungsbildern auf. Das Lokalisierungsmodul 9 ist dabei ausgebildet, basierend auf den Überwachungsdaten und auf den Stationserkennungsdaten 10 eine Station zu erkennen und basierend darauf für eine erkannte Station Stationspositionen 11 zu bestimmen. Die Stationspositionen 11 sind insbesondere Koordinaten in einem dreidimensionalen Raum und geben die Position der Station 5 im Arbeitsbereich 3 und/oder in den Überwachungsbildern wieder. Ferner können die Stationspositionen 11 auch Informationen zur Lage, beispielsweise Winkellage, aufweisen.

Die zentrale Auswerteeinheit 8 umfasst ein Modellerzeugungsmodul 12. Das Modellerzeugungsmodul 12 erhält die Stationspositionen 11 und die Überwachungsdaten bereitgestellt. Das Modellerzeugungsmodul 12 ist ausgebildet, basierend auf den Überwachungsdaten und den Stationspositionen 11 ein Modell 13 des Arbeitsbereiches 3 mit den Stationen 5 und der Handhabungseinrichtung 2 zu erzeugen. Das Modell 13 ist dabei ein dreidimensionales Modell. Vorzugsweise ist das Modell 13 ein CAD-Modell des Arbeitsbereiches 3, umfassend die Stationen 5 und der Handhabungseinrichtung 2. Zur Beschreibung der Lage und/oder der Positionen der Stationen 5 und/oder der Handhabungseinrichtung 2 im Modell 13 kann das Modellerzeugungsmodul 12 ein Hilfskoordinatensystem 14 umfassen.

Die zentrale Auswerteeinheit 8 weist ein Aufgabendefinitionsmodul 15 auf. Das Aufgabendefinitionsmodul 15 ist ausgebildet, den Arbeitsschritt, der von der Handhabungseinrichtung 2 in dem Arbeitsbereich 3 an dem Werkstück 6 durchzuführen ist, zu definieren und/oder auszuwählen. Insbesondere ist das Aufgabendefinitionsmodul 15 so angelegt, dass ein Benutzer die Aufgabe und/oder den Arbeitsschritt auf einer semantischen Basis näher definieren und/oder auswählen kann. Beispielsweise umfasst das Aufgabendefinitionsmodul 15 dazu, semantische Phrasen 16 beispielsweise "greife" "hebe" oder "transportiere". Der Benutzer kann diese semantischen Phrasen 16 durch Festlegung und/oder Eingabe von Stationspositionen 11 definieren und/oder verknüpfen. Ferner kann der Benutzer die Aufgabe und/oder die semantischen Phrasen 16 auch durch Bestimmung einer Endlage 17 vervollständigen. Die Endlage 17 umfasst dabei neben den Koordinaten zur Bestimmung der Ablageposition auch Informationen über die Lage im Raum, beispielsweise drei Eulerwinkel. Alternativ kann es vorgesehen sein, dass mittels des Aufgabendefinitionsmoduls 15 der Benutzer die Aufgabe und/oder den Arbeitsschritt mittels optischer Auswahl und/oder optischer Markierung definieren und/oder auswählen kann.

Die zentrale Auswerteeinheit 8 umfasst ein Bahnplanungsmodul 18. Das Bahnplanungsmodul 18 ist ausgebildet, basierend auf der Aufgabe, dem Arbeitsschritt und/oder den Stationspositionen 11 eine Trajektorie X(t) zu planen, wobei diese Trajektorie X(t) den Weg-Zeit-Verlauf des Werkstücks 6 während des Arbeitsschrittes beschreibt. Das Bahnplanungsmodul 18 ist ferner ausgebildet, die Trajektorie X(t) so zu bestimmen, dass die Trajektorie X(t) kollisionsfrei ist, also keine Kollision von Werkstück 6 mit der Handhabungseinrichtung 2 und/oder mit Objekten im Arbeitsbereich 3 entstehen.

Ferner ist es vorgesehen, dass die zentrale Auswerteeinheit 8 ein Steuermodul umfasst, wobei das Steuermodul ausgebildet ist, die Handhabungseinrichtung 2 zur Durchführung des Arbeitsschrittes anzusteuern. Beispielsweise steuert das Steuermodul die Handhabungseinrichtung 2 so an, dass die Handhabungseinrichtung 2 das Werkstück 6 mit dem Greifer 4 greift und entlang der Trajektorie X(t) transportiert.

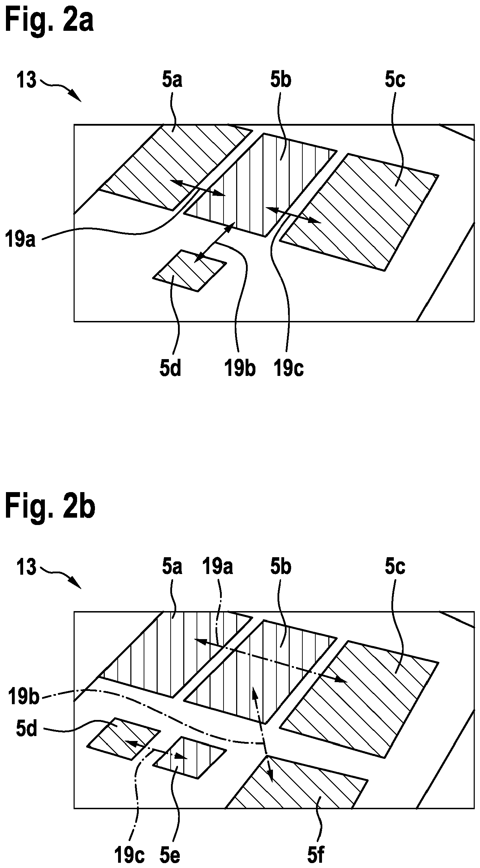

Figur 2a zeigt die Ansicht einer Anzeigeeinheit, wobei das Modell 13 des Arbeitsbereiches 3 angezeigt wird. Das Modell 13 umfasst vier Stationen 6a, 6b, 6c und 6d. Die Stationen 6a, 6c und 6d bilden dabei Werkstücksenken, wobei die Station 6b eine Werkstückquelle bildet. Der mittels diesem Modell definierte und/oder ausgewählte Arbeitsschritt ist ein Arbeitsschritt auf Werkstückbasis. Der Arbeitsschritt umfasst dabei drei Prozesse 19a, 19b und 19c. Die Prozesse 19a, 19b und 19c stellen Prozesse dar, die mittels eines einzelnen Arms der Handhabungseinrichtung 2 durchführbar sind. Beispielsweise ist der Prozess 19a definiert als "greife ein Werkstück 6 von der Station 5b und lege es in der Station 5a ab". Der Prozess 19b ist beispielsweise definiert als "greife ein Objekt 6 in der Station 5b, transportiere es zur Station 5b und lege es dort ab". Der Prozess 19c ist beispielsweise definiert als "greife das Werkstück 6 und lege es in der Station 5c ab". Beispielsweise ist der Arbeitsschritt definierbar, indem ein Benutzer ein Werkstück 6 einer Station 5 in eine andere Station 5 zieht, wobei dieser Arbeitsschritt dem Transfer des Werkstückes von der ersten Station zu der zweiten Station entspricht.

Figur 2b zeigt ebenfalls ein Modell 13 des Arbeitsbereichs 3, wobei dieses Modell als Werkstückquellen die Stationen 5a, 5b und 5e umfasst. Das Modell 13 umfasst als Werkstücksenken die Stationen 5c, 5d und 5f. Der Arbeitsschritt, der mittels diesem Modell definiert und/oder ausgewählt wurde, ist ein Arbeitsschritt auf Palettenbasis. Dies bedeutet insbesondere, dass dieser Arbeitsschritt kein einzelnes Werkstück 6 transportiert und/oder bearbeitet, sondern eine ganze Werkstückpalette transportiert und/oder bearbeitet. Insbesondere sind die Prozesse 19a, 19b und 19c zur Durchführung des Arbeitsschrittes Prozesse, die mittels zwei Armen der Handhabungseinrichtung 2 durchzuführen sind. Der Prozess 19a ist beispielsweise ausgebildet, eine Palette von Werkstücken 6 von der Station 6a zu der Station 5c zu transportieren. Der Prozess 19b ist beispielsweise definiert, eine Palette von der Station 5b zu der Station 5f zu transportieren. Der Prozess 19c ist dabei ausgebildet, eine Palette von Werkstücken 6 von der Station 5d zu der Station 5e zu transportieren. Insbesondere verdeutlicht das Modell 13 auch, dass Stationen unterschiedliche Form und/oder Größe haben können, wobei die Station 5d quadratisch ist und viel kleiner ist als die rechteckige Station 5a.

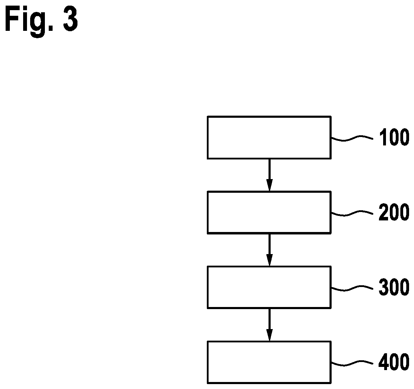

Figur 3 zeigt ein Ablaufschema eines Verfahrens zur Durchführung eines Arbeitsschrittes mit der Handhabungseinrichtung 2. In einem Lernschritt 100 wird der Handhabungsanordnung 1 und/oder dem Lokalisierungsmodul 9 eine Vielzahl an Trainingsdaten bereitgestellt. Die Trainingsdaten umfassen beispielsweise Bilder, welche Arbeitsbereiche 3 mit Stationen 5 zeigen. Das Lokalisierungsmodul 9 umfasst dabei ein Einlernmodul, wobei in dem Lernschritt 100 durch das Einlernmodul aus den Trainingsdaten Erkennungsmerkmale zur Detektion von Stationen in den Überwachungsdaten extrahiert werden. Diese Erkennungsmerkmale werden den Stationserkennungsdaten 10 bereitgestellt. Insbesondere werden in diesem Schritt Klassifizierungen und/oder Strukturen zur Erkennung der Stationen gewonnen. Dieser Schritt kann beispielsweise durch ein neuronales Netzwerk ausgeführt werden. Auf den Lernschritt 100 folgt ein Lokalisierungsschritt 200. In dem Lokalisierungsschritt 200 wird basierend auf den Überwachungsdaten die Stationsposition 11 einer und/oder einer Vielzahl von Stationen 5 definiert. Dabei werden beispielsweise die Überwachungsdaten und/oder die Überwachungsbilder auf Strukturen und/oder Merkmale hin untersucht, welche auf Stationen 5 hinweisen. Basierend auf den aufgefundenen Stationen 5 werden die Positionen und/oder Lagen der Stationen 5 als Stationspositionen 11 bestimmt.

In einem Aufgabendefinitionsschritt 300 wird durch eine Person eine Aufgabe definiert. Insbesondere wird die Aufgabe durch die Person auf einer semantischen und/oder optischen Auswahl definiert und/oder ausgewählt. Beispielsweise kann dazu der Benutzer aus einer Sammlung von vorgefertigten Aufgaben, beispielsweise "transportiere und bohre das Werkstücke" auswählen. Diese ausgewählten Aufgaben können insbesondere mittels der Stationspositionen 11 näher definiert werden, beispielsweise "greife ein Werkstück von Station 5 an der Stationsposition 11 und bohre dieses Werkstück 6".

In einem Planungsschritt 400 wird basierend auf der definierten Aufgabe und den Stationspositionen der Arbeitsschritt geplant und eine Trajektorie X(T) bestimmt, wobei dieser Trajektorie eine kollisionsfreie Trajektorie des Werkstücks mit Gegenständen in dem Arbeitsbereich 3 ist. Basierend auf dieser Trajektorie X(T) wird die Handhabungseinrichtung 2 zur Durchführung des Arbeitsschrittes angesteuert.

## Patentansprüche

1. Handhabungsanordnung (1)
mit einer Handhabungseinrichtung (2) zur Durchführung mindestens eines Arbeitsschrittes mit und/oder an einem Werkstück (6) in einem Arbeitsbereich (3) der Handhabungseinrichtung (2),
wobei in dem Arbeitsbereich (3) Stationen (5, 5a-5f) angeordnet sind,
mit mindestens einem Überwachungssensor (7) zur optischen Überwachung des Arbeitsbereichs (3) und zur Bereitstellung als Überwachungsdaten, mit einem Lokalisierungsmodul (9),
wobei das Lokalisierungsmodul (9) ausgebildet ist, die Stationen (5, 5a-5f) zu erkennen und für die Stationen (5, 5a-5f) jeweils eine Stationsposition (11) zu bestimmen,
mit einem Modellerzeugungsmodul (12) zur Generierung eines Modells (13) des Arbeitsbereichs (3),
mit einer Anzeigeeinheit zur Anzeige des Modells (13), wobei durch einen
Benutzer im angezeigten Modell (13) Abschnitte, welche der Benutzer als Stationen erkennt und/oder identifiziert, als Zusatzerkennungsmerkmale auswählbar sind, wobei die Stationserkennungsdaten (10) die Zusatzerkennungsmerkmale umfassen,
mit einem Sicherungsmodul, wobei das Sicherungsmodul zur Übernahme der Überwachungsdaten während des Arbeitsschrittes datentechnisch mit dem Überwachungssensor (7) verbunden ist und ausgebildet ist, basierend auf Veränderungen im Arbeitsbereich (3) die Handhabungseinrichtung anzusteuern, mit einem Steuermodul, wobei das Steuermodul ausgebildet ist, die Handhabungseinrichtung (2) zur Durchführung des Arbeitsschrittes basierend auf der jeweiligen Stationsposition (11) anzusteuern,
mit einem Aufgabendefinitionsmodul (15) zur semantischen Auswahl und/oder Definition des Arbeitsschrittes.

2. Handhabungsanordnung (1) nach Anspruch 1, **dadurch gekennzeichnet, dass** das Lokalisierungsmodul ein Einlernmodul mit Trainingsdaten umfasst, wobei das Einlernmodul ausgebildet ist, basierend auf den Trainingsdaten Erkennungsmerkmale als Stationserkennungsdaten (10) zur Detektion der Stationen (5, 5a-5f) zu bestimmen, wobei das Lokalisierungsmodul (9) ausgebildet ist, basierend auf Stationserkennungsdaten (10) die Stationen (5, 5a-5f) zu erkennen.

3. Handhabungsanordnung (1) nach einem der vorherigen Ansprüche, **dadurch gekennzeichnet, dass** der Arbeitsschritt mindestens zwei zu definierende Parameter aufweist, wobei die zwei Parameter eine Startposition und eine Endposition umfassen, wobei für den Benutzer in dem angezeigten Modell (13) eine der Stationen (5, 5a-5f) als Startposition auswählbar ist und in dem angezeigten eine der Stationen (5, 5a-5f) als Endposition auswählbar und/oder einstellbar ist.

4. Handhabungsanordnung (1) nach einem der vorherigen Ansprüche, **dadurch gekennzeichnet, dass** nach Beendigung des Arbeitsschritts das Werkstück (6) in einer Endlage ist, wobei die Endlage durch den Benutzer mittels des Aufgabendefinitionsmoduls (15) auswählbar ist und/oder basierend auf den Überwachungsdaten bestimmt ist.

5. Handhabungsanordnung (1) nach einem der vorherigen Ansprüche, **gekennzeichnet durch** ein Bahnplanungsmodul (18) zur Bestimmung einer Trajektorie (X(t)) der Handhabungseinrichtung (2) und/oder des Werkstücks (6) bei einer Durchführung des Arbeitsschritts.

6. Handhabungsanordnung (1) nach einem der vorherigen Ansprüche, **gekennzeichnet durch** ein Prüfmodul, wobei das Prüfmodul Regeln umfasst und ausgebildet ist, die Handhabungseinrichtung (2) zu Durchführung und/oder zum Abbruch des Arbeitsschritts basierend auf der Erfüllung der Regeln anzusteuern.

7. Handhabungsanordnung (1) nach einem der vorherigen Ansprüche, **gekennzeichnet durch** einen Zusatzsensor zur Feinauflösung eines Abschnittes des Arbeitsbereichs und Bereitstellung als Feinauflösungsdaten, und durch ein Feinlokalisierungsmodul zur exakteren Lagebestimmung der Station (5, 5a-5f) basierend auf der Stationsposition (11), den Feinauflösungsdaten, den Stationserkennungsdaten (10) und/oder den Sensordaten.

8. Handhabungsanordnung (1) nach Anspruch 7, **dadurch gekennzeichnet, dass** der Zusatzsensor an der Handhabungseinrichtung (2) mitgeführt ist.

9. Verfahren zum Betreiben einer Handhabungseinrichtung (2) mit
einer Handhabungsanordnung nach einem der vorherigen Ansprüche, wobei mittels eines Überwachungssensors (7) ein Arbeitsbereich (3) der Handhabungseinrichtung (2) optisch überwacht wird, wobei der Überwachungssensor (7) Überwachungsdaten des Arbeitsbereichs (3) bereitstellt, wobei basierend auf den Überwachungsdaten Stationen (5, 5a-5f) im Arbeitsbereich (3) detektiert und/oder erkannt werden, wobei für die erkannten Stationen (5, 5a-5f) eine Stationsposition (11) bestimmt wird, wobei ein Modell des Arbeitsbereichs generiert wird und auf einer Anzeigeeinheit angezeigt,
wobei durch einen Benutzer im angezeigten Modell (13) Abschnitte, welche der Benutzer als Stationen erkennt und/oder identifiziert, als Zusatzerkennungsmerkmale auswählbar sind, wobei die Stationserkennungsdaten (10) die Zusatzerkennungsmerkmale umfassen,
wobei das Sicherungsmodul zur Übernahme der Überwachungsdaten während des Arbeitsschrittes datentechnisch mit dem Überwachungssensor (7) verbunden ist und ausgebildet ist, basierend auf Veränderungen im Arbeitsbereich (3) die Handhabungseinrichtung anzusteuern,
wobei das Steuermodul ausgebildet ist, die Handhabungseinrichtung (2) zur Durchführung des Arbeitsschrittes basierend auf der jeweiligen Stationsposition (11) anzusteuern,
wobei das Aufgabendefinitionsmodul (15) zur semantischen Auswahl und/oder Definition des Arbeitsschrittes ausgebildet ist.

10. Computerprogramm mit Programmcodemitteln wobei, alle Schritte des Verfahrens nach Anspruch 9 durchgeführt werden, wenn das Programm auf einem Computer und auf der Handhabungsanordnung (1) nach einem der Ansprüche 1 bis 8 ausgeführt wird.

## Claims

1. Handling assembly (1)
comprising a handling device (2) for carrying out at least one work step with and/or on a workpiece (6) in a working area (3) of the handling device (2), wherein stations (5, 5a-5f) are arranged in the working area (3),
comprising at least one monitoring sensor (7) for optically monitoring the working area (3) and for providing monitoring data,
comprising a localization module (9),
wherein the localization module (9) is designed to identify the stations (5, 5a-5f) and to determine a station position (11) for each of the stations (5, 5a-5f), comprising a model-generating module (12) for generating a model (13) of the working area (3),
comprising a display unit for displaying the model (13), wherein sections which a user identifies and/or recognises as stations can be selected as auxiliary identification features by the user in the displayed model (13), wherein the station identification data (10) includes the auxiliary identification features, comprising a safety module, wherein the safety module, for receiving the monitoring data during the work step, is connected for data processing purposes to the monitoring sensor (7) and is designed to actuate the handling device based on changes in the working area (3),
comprising a control module, wherein the control module is designed to actuate the handling device (2), for carrying out the work step, based on the respective station position (11),
comprising a task definition module (15) for semantic selection and/or definition of the work step.

2. Handling assembly (1) according to Claim 1, **characterized in that** the localization module comprises a teaching module containing training data, wherein the teaching module is designed to determine, based on the training data, identification features as station identification data (10) for detecting the stations (5, 5a-5f) , wherein the localization module (9) is designed to identify the stations (5, 5a-5f) based on station identification data (10).

3. Handling assembly (1) according to either of the preceding claims, **characterized in that** the work step has at least two parameters to be defined, wherein the two parameters comprise a start position and an end position, wherein one of the stations (5, 5a-5f) can be selected as the starting position for the user in the displayed model (13) and one of the stations (5, 5a-5f) can be selected and/or set as the end position in the displayed.

4. Handling assembly (1) according to one of the preceding claims, **characterized in that**, following completion of the work step, the workpiece (6) is in an end position, wherein the end position can be selected by the user by means of the task definition module (15) and/or is determined based on the monitoring data.

5. Handling assembly (1) according to one of the preceding claims, **characterized by** a path planning module (18) for determining a trajectory (X(t)) of the handling device (2) and/or the workpiece (6) when carrying out the work step.

6. Handling assembly (1) according to one of the preceding claims, **characterized by** a test module, wherein the test module includes rules and is designed to actuate the handling device (2) for carrying out and/or for aborting the work step based on the rules being satisfied.

7. Handling assembly (1) according to one of the preceding claims, **characterized by** an auxiliary sensor for fine resolution of a section of the working area and providing fine resolution data, and by a fine localization module for more exact position determination for the station (5, 5a-5f) based on the station position (11), the fine resolution data, the station identification data (10) and/or the sensor data.

8. Handling assembly (1) according to Claim 7, **characterized in that** the auxiliary sensor is carried along on the handling device (2).

9. Method for operating a handling device (2) comprising a handling assembly according to one of the preceding claims, wherein a working area (3) of the handling device (2) is optically monitored by means of a monitoring sensor (7), wherein the monitoring sensor (7) provides monitoring data relating to the working area (3), wherein stations (5, 5a-5f) are detected and/or identified in the working area (3) based on the monitoring data, wherein a station position (11) is determined for the identified stations (5, 5a-5f), wherein a model of the working area is generated and displayed on a display unit, wherein sections which a user identifies and/or recognises as stations can be selected as auxiliary identification features by the user in the displayed model (13), wherein the station identification data (10) includes the auxiliary identification features, wherein the safety module, for receiving the monitoring data during the work step, is connected for data processing purposes to the monitoring sensor (7) and is designed to actuate the handling device based on changes in the working area (3),
wherein the control module is designed to actuate the handling device (2), for carrying out the work step, based on the respective station position (11), wherein the task definition module (15) is designed for semantic selection and/or definition of the work step.

10. Computer program having program code means, wherein all the steps of the method according to Claim 9 are carried out when the program is executed on a computer and on the handling assembly (1) according to one of Claims 1 to 8.

## Revendications

1. Agencement de manipulation (1)
comprenant un dispositif de manipulation (2) pour effectuer au moins une étape de travail avec et/ou sur une pièce à travailler (6) dans une zone de travail (3) du dispositif de manipulation (2),
dans lequel des stations (5, 5a-5f) sont disposées dans la zone de travail (3), comprenant au moins un capteur de surveillance (7) pour la surveillance optique de la zone de travail (3) et pour la fourniture de données de surveillance,
comprenant un module de localisation (9),
dans lequel le module de localisation (9) est réalisé pour reconnaître les stations (5, 5a-5f) et pour déterminer respectivement une position de station (11) pour les stations (5, 5a-5f),
comprenant un module de génération de modèle (12) pour générer un modèle (13) de la zone de travail (3),
comprenant une unité d'affichage pour afficher le modèle (13), dans lequel un utilisateur peut sélectionner dans le modèle affiché (13) en tant que particularités de reconnaissance supplémentaires des parties que l'utilisateur reconnaît et/ou identifie en tant que stations, les données de reconnaissance de station (10) comprenant les particularités de reconnaissance supplémentaires,
comprenant un module de sauvegarde, dans lequel le module de sauvegarde est relié en technique de données au capteur de surveillance (7) pour recevoir les données de surveillance pendant l'étape de travail et est réalisé pour piloter le dispositif de manipulation sur la base de changements dans la zone de travail (3),
comprenant un module de commande, le module de commande étant réalisé pour piloter le dispositif de manipulation (2) pour exécuter l'étape de travail sur la base de la position de station (11) respective,
comprenant un module de définition de tâche (15) pour la sélection et/ou définition sémantique(s) de l'étape de travail.

2. Agencement de manipulation (1) selon la revendication 1, **caractérisé en ce que** le module de localisation comprend un module d'apprentissage avec des données d'entraînement, dans lequel le module d'apprentissage est réalisé pour déterminer sur la base des données d'entraînement des particularités de reconnaissance en tant que données de reconnaissance de station (10) pour détecter les stations (5, 5a, 5f), dans lequel le module de localisation (9) est réalisé pour reconnaître les stations (5, 5a-5f) sur la base de données de reconnaissance de station (10).

3. Agencement de manipulation (1) selon l'une quelconque des revendications précédentes, **caractérisé en ce que** l'étape de travail présente au moins deux paramètres à définir, dans lequel les deux paramètres comprennent une position initiale et une position finale, dans lequel l'utilisateur peut sélectionner dans le modèle affiché (13) l'une des stations (5, 5a-5f) en tant que position initiale et peut sélectionner et/ou régler dans l'affiché l'une des stations (5, 5a, 5f) en tant que position finale.

4. Agencement de manipulation (1) selon l'une quelconque des revendications précédentes, **caractérisé en ce qu'**à la fin de l'étape de travail, la pièce à travailler (6) se trouve dans une position finale, la position finale pouvant être sélectionnée par l'utilisateur au moyen du module de définition de tâche (15) et/ou étant déterminée sur la base des données de surveillance.

5. Agencement de manipulation (1) selon l'une quelconque des revendications précédentes, **caractérisé par** un module de planification de trajet (18) pour déterminer une trajectoire (X(t)) du dispositif de manipulation (2) et/ou de la pièce à travailler (6) lorsque l'étape de travail est exécutée.

6. Agencement de manipulation (1) selon l'une quelconque des revendications précédentes, **caractérisé par** un module de contrôle, le module de contrôle comprenant des règles et étant réalisé pour piloter le dispositif de manipulation (2) pour exécuter et/ou abandonner l'étape de travail sur la base du respect des règles.

7. Agencement de manipulation (1) selon l'une quelconque des revendications précédentes, **caractérisé par** un capteur supplémentaire pour une résolution précise d'une partie de la zone de travail et pour la fourniture de données de résolution précise, et par un module de localisation précise pour une détermination de position plus exacte de la station (5, 5a-5f) sur la base de la position de station (11), des données de résolution précise, des données de reconnaissance de station (10) et/ou des données de capteur.

8. Agencement de manipulation (1) selon la revendication 7, **caractérisé en ce que** le capteur supplémentaire est entraîné au niveau du dispositif de manipulation (2).

9. Procédé permettant de faire fonctionner un dispositif de manipulation (2) pourvu d'un agencement de manipulation selon l'une quelconque des revendications précédentes, dans lequel un capteur de surveillance (7) surveille optiquement une zone de travail (3) du dispositif de manipulation (2), dans lequel le capteur de surveillance (7) fournit des données de surveillance de la zone de travail (3), dans lequel des stations (5, 5a-5f) sont détectées et/ou reconnues dans la zone de travail (3) sur la base des données de surveillance, dans lequel une position de station (11) est déterminée pour les stations reconnues (5, 5a-5f), dans lequel un modèle de la zone de travail est générée et affiché sur une unité d'affichage, dans lequel un utilisateur peut sélectionner en tant que particularités de reconnaissance supplémentaires dans le modèle affiché (13) des parties que l'utilisateur reconnaît et/ou identifie en tant que stations, dans lequel les données de reconnaissance de station (10) comprennent les particularités de reconnaissance supplémentaires, dans lequel le module de sauvegarde est relié en technique de données au capteur de surveillance (7) pour recevoir les données de surveillance pendant l'étape de travail et est réalisé pour piloter le dispositif de manipulation sur la base de changements dans la zone de travail (3),
dans lequel le module de commande est réalisé pour piloter le dispositif de manipulation (2) pour exécuter l'étape de travail sur la base de la position de station (11) respective,
dans lequel le module de définition de tâche (15) est réalisé pour la sélection et/ou définition sémantique(s) de l'étape de travail.

10. Programme informatique comprenant des moyens de code programme, dans lequel toutes les étapes du procédé selon la revendication 9 sont exécutées lorsque le programme est exécuté sur un ordinateur et sur l'agencement de manipulation (1) selon l'une quelconque des revendications 1 à 8.
